# EUROPEAN PATENT APPLICATION

(11) **EP 1 097 972 A1**
(43) Date of publication of application: **09.05.2001**
(21) Application number: 00650175.3
(22) Date of filing: 01.11.2000
(51) Int. Cl.: C09D 11/02, C08L 91/06

(54) **Rheological additives for inks, method of making said additives and ink formulations containing said additives**

(30) Priority: 03.11.1999 US 432788
(71) Applicant: RHEOX, INC., Hightstown, New Jersey 08520 (US)
(72) Inventor: Tavares, Bruce, Blairstown, NJ 07825 (US)
(74) Representative: Duffy, Assumpta Dympna

(57) **Abstract**

A liquid active rheological additive includes a polyalphaolefin and an oxidized alpha-olefin or alkene derivative comprising an isocyanate substituent. The additive provides superior rheological properties to a large variety of inks including lithographic and heat set inks.

The additive is particularly useful for heat-set and lithographic inks and is pumpable and pourable, thereby allowing for easy use in most modern automated ink plants.

## Description

### BACKGROUND AND SUMMARY OF THE INVENTION

The present invention is directed to a rheological additive for heat-set and lithographic inks. The additive comprises an oxidized wax or wax derivative and an alpha-polyolefin polymer. The rheological additive is pourable and pumpable, thereby allowing for easy use in mechanical, automated ink plant systems.

It is known that printing inks must be provided with rheological properties including viscosity modification. Today in many heatset and sheetfed inks the bulk of the rheological properties are imparted by the vehicle system. These vehicles can be free flow or gelled. Organoclays are used in conjunction with vehicle to provide to the ink the desired rheology needed for modern printing presses.

Organoclays however are made as dry powders and require extra cost in order to be made pourable. It is becoming increasingly important to ink manufacturers that rheological additives they utilize be in a liquid pumpable form for ease of manufacture and to be compatible with their largely liquid process equipment. Organoclays and their use are described in a large number of patents; see e.g. U.S. Patent Nos. 5,735,943; 5,718,841 and 5,429,999.

While not related to rheological additives, two recent U.S. patents issued to the assignee hereof describe certain aspects of ink formulations.

U.S. Patent No. 5,749,949, discloses an anti-abrasion ink additive comprising a mixture of sintered PTFE (i.e., polytetrafluoroethylene) and pharmaceutical grade petrolatum.

U.S. Patent No. 5,591,796, discloses a pumpable, anti-abrasion/slip ink additive comprising a mixture of PTFE and a polyalphaolefin (PAO) containing 3 to 25 carbon atoms.

### DETAILED DESCRIPTION OF INVENTION

The present invention is directed to a liquid rheological additive for ink formulations, especially heat-set and lithographic inks, comprising (a) a wax as defined hereafter and (b) one or more polyalphaolefin polymers.

The liquid rheological additive according to the present invention is pourable and pumpable at room or ambient temperature. Although "pourable" and "pumpable" are terms resisting precise definition, they are given a working definition in this application as follows: (1) "pourable" in general means that the rheological additive exhibits 30,000 cP viscosity or less at 77°F as measured with a Brookfield RVT Viscometer at 50 rpm employing a #4 spindle; (2) "pumpable" means that the additive exhibits 30,000 cP or less in viscosity at 25°C at the shear rate of the pump.

In addition to increasing the viscosity and yield of inks, the rheological additive of the present invention reduces misting. Further, the additive according to the present invention does not diminish ink and provides ink with viscosity properties very similar, and in some cases, superior to organoclays.

Other objects, advantages and novel features of the present invention will become apparent from the following detailed description of the invention. Other than in the operating examples, or where otherwise indicated, all numbers expressing quantities of ingredients or reaction conditions used herein are to be understood as modified in all instances by the term "about."

Element (a) is an oxidized wax or a derivative produced as a reaction product of an oxidized alpha-olefin and/or an oxidized alkene and an isocyanate which has been cross-linked. The word "wax" is used to cover both waxes and such derivatives. Cross-linked is a polymer term that indicates the reaction product is believed to be non-linear in whole or in part.

Products of the general type of element a) are described in U.S. Patent No. 4,426,229, which is hereby incorporated by reference. Salts of the isocyanated waxes can also be used.

The oxidized alpha-olefins and alkenes are reacted with a wide variety of isocyanates, preferably polyisocyanates, in varying amounts to form element (a). The specific nature of the product will depend upon the particular and amounts of reactants, and conditions. In general, about 1-20% or more of the polyisocyanate is reacted with the oxidized alpha-olefin or alkene, such as from about 2-20%, for example from about 5-10%, but most preferably from 6 to 8%.

Reaction times and temperatures can be varied with a preferred reaction time from about one to eight hours. These reactions are normally carried out at temperatures up to 290 °F and higher. Where desired one can carry out the reaction at lower temperatures. The oxidized wax is preferrably obtained when it is reacted with diisocyanate at 200 °F, but it is often preferred to carry out the reaction at slightly higher temperatures for the sake of convenience.

The preferred isocyanates of this invention are the polyisocyanates and more specifically the diisocyanates, which of course contain two distinct and separate isocyanate groups. Representative compounds are the polymethylene diiocyanates such as ethylene diisocyanate, trimethylene diisocyanate, tetramethylene diisocyanate, pentamethylene diisocyanate, etc.; the alkylene diisocyanates such as propylene-1,2-diisocyanate, butylene-1,2-diisocyanate, butylene-1,3-diiocyanate, butylene-2,3-diisocyanate; the alkylidine diisocyanates such as ethylidene diisocyanate, butylidene diisocyanate, and heptylidene diisocyanate. The cycloalkylene diisocyanates such as cyclopentylene-,3-diisocyanate, cyclohexylene-1,2-diisocyanate, cyclohexylene-1,3-diisocyanate; the aromatic diisocyanates such as tolylene diisocyanate (TDI), m-phenylene diisocyanate, p-phenylene diisocyanate, 1-methylphenylene-2,4-diisocyanate, 1-methylphenylene-2,6-diisocyanate, naphthylene-1,4-diisocyanate, naphthylene-1,5-diisocyanate; aliphatic-aromatic diisocyanates such as xylylene-1,4-diisocyanate, xylylene-1,3-diisocyanate, 4,4'-diphenylenemethane diisocyanate, 4,4'-diphenylenepropane diisocyanate, etc.

Such chemicals are most conveniently prepared by first oxidizing the alpha-olefin and/or alkene followed by reaction with TDI. Most, if not all, of the TDI is consumed in this reaction; that is, there is preferably no free isocyanate functionality remaining after the reaction (the absence of isocyanate functionality is an important consideration). It is preferred that the wax component is prepared using a mixture (using about 5 to 10% by weight) of 2,4-TDI, 2,6-TDI or a mixture thereof with the mixture most preferred.

While the isocyanate is consumed via reaction only with the oxidized alpha-olefin and/or alkene, products using additional amine reactants are also useful.

A line of Ven-Wax oxidates produced by Venture Chemicals, Inc., a Texas Company, are particularly useful for the invention. These chemicals are produced by controlled, liquid phase oxidation processes. Particularly useful is Ven-Wax D-5573 available from Venture Chemicals, Inc. Ven-Wax D-5573 is a high molecular weight, oxidized, alpha-olefin wax derivative having an isocyanate substituent (CAS Reg. No. 67891-75-2); it is a reaction product made with 2, 4-TDI as the isocyanate.

Ven-Wax D-5573 has a Brookfield viscosity at 100°C of about 60-120 cP; a total acid number of about 5-8; a melting point of about 145-150°F; and a specific gravity at 100°C of 0.89-0.90.

Other chemicals can also be added to the reaction to modify the resulting properties of the products particularly those having reactive hydrogens capable of reacting with the isocyanate groups.

Element (b) the second critical element for producing the additives of this invention is a polyalphaolefin polymer also referred to as an alpha-polyolefin polymer. Polyalphaolefins are chemicals based on olefins; olefins being a class of unsaturated aliphatic hydrocarbons having one or more double bonds, usually obtained by cracking naphtha or other petroleum fractions at high temperatures (1500° - 1700°F.). Those olefins containing one double bond are called alkenes, and those with two, alkadienes or diolefins. Alpha olefins or α-olefins are particularly reactive, because the double bond is on the first carbon atom. The more common use of polyalphaolefins are as industrial oils, hydraulic fluids, and heat transfer fluids.

As described, polyalphaolefins (PAO) are polymers derived from simple alpha olefins. Most commercial polyalphaolefins are formed by polymerization of alpha olefins, such as isobutene, in the presence of suitable metal halide catalysts. Such starting alpha olefins contain 3 or more carbon atoms where the double bond is on a terminal carbon atom. There is usually no more than one alkyl substitute on the carbon atom once the double bond is removed from the terminal carbon atom. Such olefins can have the formula:

R-CH=CH₂

where R is an alkyl group. The production of polymers of alpha-olefins by the use of aluminum halide catalysts and by high pressure thermal or peroxide-catalyzed polymerization is well known in the prior art.

Liquid polyalphaolefins are preferred for this invention. Liquids characteristically have the ability to flow and to fill a container into which they are put, a property depending largely on their viscosity. Molecules of liquids are free to move within the limits set by intermolecular attractive forces but still are constrained by substances with a force equal to or than greater than glass. Liquids can also be characterized as substances which, at their surface, eject some small portion of their molecules at a rate depending on their surface tension.

Particularly useful for the invention hereof are the liquid forms of PAO of a molecular weight of around 275 to 5000, with a preferred range of around 1000 to 3500. Alpha olefins containing carbon chains of C₃ to C₂₅, such as propene, butene, sentene, hexene, octene, nonene, dicene, etc. can be polymerized to produce polyalphaolefin products useful for this invention. If the PAO product is greater than about C₄₀, the viscosity of the resultant product is generally too high to have commercial utility. Particularly preferred are C₅ to C₂₀ polymerized alpha alkenes, which can be produced from hydrogenated natural and synthetic hydrocarbon bases, and are most often produced in a clear liquid form.

Particularly useful in formulating the additive of the instant invention are polyalphaolefins made by several companies including Chevron and Petrolite Corporation, with Petrolite Vybar 825, which is a C₁₀ polyalphaolefin, an exemplary material. A line of polyalphaolefins made by Albemare Corporation (now owned by BP Amoco) and sold under the trade description Durasyn including Durasyn162, 164, 166, 168, 170, 174, and 180 are also useful. Particularly preferred are polyalphaolefins, made from a synthetic hydrocarbon base, having a molecular weight of about 900 t0 1400 and a viscosity at 40°C. of around 300 to 500 cps, measured by ASTM test method D445.

The most preferred is alpha-olefin polymer designated Durasyn® 168. Durasyn® 168 is a hydrogenated, synthetic hydrocarbon base fluid containing greater than 99 wt.% 1-decene homopolymer (CAS Reg. No. 68037-01-4). Durasyn® 168 has a Brookfield viscosity at -40°C of 16,920 cP; a total acid number of less than 0.01 mg KOH/g; and a specific gravity of about 0.83.

The additive of the instant invention can contain a ratio of from 10:90 to 90:10 of each of the two mentioned chemicals, with no additional additives. The additive in a preferred embodiment comprises 10-50 wt.% of the wax or wax derivative, and 50-90 wt.% of an polyalphaolefin polymer, more preferably about 20 wt.% of the wax or wax derivative and about 80 wt.% of the polyalphaolefin polymer. Additional chemicals can be optionally added however in addition to the two above-mentioned basic ingredients.

In one aspect, the invention hereof comprises a method of making a rheological additive for an ink, comprising
a) adding a polyalphaolefin polymer to a vessel;
b) heating the vessel under agitation;
c) adding an oxidized wax as defined hereinbefore to the vessel;
d) dissolving said wax in the polyalphaolefin polymer to form a mixture;
e) cooling the vessel; and
f) emptying or discharging the vessel to recover the rheological additive mixture.

According to the present invention, for example, the rheological additive is made by adding the polyalphaolefin to a vessel and heating to about 180°F under agitation. The oxidized wax or wax derivative is then slowly added to the vessel, which is continually agitated. Once the wax has completely dissolved, the vessel is cooled while continuing agitation. Cooling can also be accomplished through a heat exchanger such as a votator or ice cream machine, for example. The cooling may be, for example, at a rate of about 0.5 to 2°F per 1 minute until ambient (or slightly higher) temperature is reached. Once ambient temperature is reached, the vessel is decanted and the rheological additive is recovered . The rheological additive has a weight-average molecular weight of about 1,500-10,000, preferably higher than about 2,000, and an acid value of about 8-40, preferably about 35-40.

While the relative amounts may vary, in general, the rheological composition will preferably make up from 0.1 % to 10% by weight of the ink to be treated. Typically, more preferred use levels are 0.25% to 7% of the mixture composition to the ink system, the percent being based on the ink system to be affected, most preferred is about 2%. All types of inks can benefit from the inventive additive with heat set high quality inks most benefited.

Use of the composition of the invention is somewhat similar to the use of present, commercial, rheological additives, and should in general require no special arrangements or apparatus when incorporating such compositions into ink systems. The additive may be added at any step in an ink production process, such as during milling or let-down, using minimum sheer forces. The rheological composition can be easily mixed into the ink system using conventional mixing equipment, such as medium and high-speed dispersing apparatus, and similar such mixture apparatus.

Since the additives are liquids, it is important to note that substantially less time and shear effort will be necessary to obtain effective dispersion of the inventive additives compared to many present-day dry powder commercial products. The additives are particularly useful in high quality inks used for magazine covers and color advertising inserts commonly contained in magazines.

The product of this invention, being pumpable, can easily be dispersed in most ink liquids. The product can be added directly to an ink master batch by using an appropriate mixer.

The rheological additive is particularly designed for use in heatset and lithographic printing inks, but can be used in a wide variety of other systems. The additive is pourable and pumpable at room or ambient temperatures, allowing for ready use in mechanized, automated ink plants or hand measuring operations. It may be incorporated at any step in the ink production process using a minimum of gentle shear. This allows the additive to be used in the milling, letdown or post add stage of production.

In addition to building viscosity and yield and reducing misting, like a conventional rheological product, the inventive additive enhances slip and improves rub characteristics in heatset inks.

Printing ink compositions using the present invention may be prepared by conventional techniques, e.g. by preparing a dispersion of the pigment in the ink vehicle and adding the additive. One preferable procedure for preparing ink compositions of the present invention is as follows:
a) Disperse the ink pigment in a vehicle, forming an ink formulation, and then
b) Disperse the inventive additive into the ink formulation by pouring, and then mixing the ink formulation for a brief period of time.

A preferred offset heatset printing ink composition may be made as follows:
a) Prepare a dispersion of 5-30 wt. percent ink pigment in 70-90 wt. percent of an ink vehicle; and
b) Add at a 1-5 wt. percent loading, based on the weight of the ink composition, the inventive additive incorporating it in the above dispersion.

### EXAMPLES:

### Example 1

This example compared the performance of two samples of an additive made according to the above description in a gel varnish yellow ink system. The additive (2 lots) was added at 2% by weight loading at 150° F into the gel varnish ink and mixed at 4000 RPM for 15 minutes. Laray viscosity and yield value were measured at 25 ºC and results compared to a blank control. The additive used in this example was a mixture of 20% Ven-Wax D-5573 and 80% Durasyn 168. The results were:

| Rheological Additive | Blank | Sample 1 | Sample 2 |
|---|---|---|---|
| Laray Viscosity | 68 | 68 | 66 |
| Laray Yield | 544 | 818 | 955 |

### Discussion of Results:

The above shows Laray Yield, a measure of low shear viscosity, is markedly better than a blank. Low shear viscosity is critical to the application of ink to printed paper to prevent strike-through and to improve the print definition and sharpness.

The foregoing disclosure has been set forth merely to illustrate the invention and is not intended to be limiting. Since modifications of the disclosed embodiments incorporating the spirit and substance of the invention may occur to persons skilled in the art, the invention should be construed to include everything within the scope of the appended claims and equivalents thereof.

## Claims

1. A liquid rheological additive especially useful for ink formulations, comprising:
a) a wax selected from the group consisting of oxidized alpha-olefins and/or oxidized alkenes comprising an isocyanate substituent which has been crosslinked, and/or a salt of such a wax; and
b) a polyalphaolefin polymer.

2. The rheological additive of Claim 1 wherein the wax of paragraph a) is a reaction product comprising isocyanates selected from the group consisting of 2, 4-TDI, 2, 6-TDI and mixtures thereof.

3. A rheological additive according to Claim 1 or 2, wherein said polyalphaolefin polymer contains carbon chains from C₃ to C₂₅.

4. The rheological additive of Claim 3 wherein the said polyalphaolefin is prepared from a C₁₀ alkene.

5. The rheological additive of any of Claims 1 to 4, wherein the ratio of the chemicals of paragraphs a) and b) are from 10:90 to 90:10 by weight.

6. A rheological additive according to any of Claims 1 to 5, wherein said additive has a weight-average molecular weight of about 1,500-10,000.

7. A method of making a rheological additive for an ink, comprising:
a) adding a polyalphaolefin polymer to a vessel;
b) heating the vessel under agitation;
c) adding a wax as defined in Claim 1 to the vessel;
d) dissolving said wax in the polyalphaolefin polymer to form a mixture;
e) cooling the vessel; and
f) emptying or discharging the vessel to recover the rheological additive mixture.

8. A method according to Claim 7, wherein said cooling is at a rate of about 0.5 to 2°F per minute.

9. A method according to Claim 7 or 8, wherein the wax was produced by a liquid phase oxidation process.

10. An ink formulation comprising a rheological additive according to any of Claims 1 to 6.

11. The ink of Claim 10 selected from the group consisting of heatset and lithographic inks.
